Europäisches Patentamt

European Patent Office

Office européen des brevets

(19)

(11) Numéro de publication : **0 012 644**
**B1**

(12)

# FASCICULE DE BREVET EUROPÉEN

(45) Date de publication du fascicule du brevet :
26.01.83

(51) Int. Cl.³ : **G 01 P 15/08**

(21) Numéro de dépôt : **79400897.9**

(22) Date de dépôt : **21.11.79**

(54) **Accéléromètre à ondes élastiques de surface.**

(30) Priorité : **30.11.78 FR 7833804**

(43) Date de publication de la demande :
**25.06.80 Bulletin 80/13**

(45) Mention de la délivrance du brevet :
**26.01.83 Bulletin 83/04**

(84) Etats contractants désignés :
**DE GB IT NL SE**

(56) Documents cités :
**FR A 1 447 718**
**FR A 2 262 288**
**FR A 2 334 958**
**FR A 2 396 306**
**US A 2 726 074**
**US A 3 233 465**
**US A 3 911 388**

**PROCEEDINGS OF THE IEEE, vol. 64, n° 5, mai
1976, New York, US, T. REEDER et al. : « Surface
accoustic wave pressure and temperatures sensors », pages 754-756.**

(73) Titulaire : **THOMSON-CSF**
**173, Boulevard Haussmann**
**F-75379 Paris Cedex 08 (FR)**

(72) Inventeur : **Hartemann, Pierre**
**"THOMSON-CSF" - SCPI 173, bld Haussmann**
**F-75360 Paris Cedex 08 (FR)**
Inventeur : **Castera, Jean-Paul**
**"THOMSON-CSF" - SCPI 173, bld Haussmann**
**F-75360 Paris Cedex 08 (FR)**

(74) Mandataire : **Wang, Pierre et al**
**THOMSON-CSF SCPI 173, Bld Haussmann**
**F-75379 Paris Cedex 08 (FR)**

## Accéléromètre à ondes élastiques de surface

L'invention se rapporte aux accéléromètres mettant en œuvre la propagation des ondes élastiques de surface.

Pour mesurer une accélération de direction donnée, il est connu de la faire agir sur un corps élastique propageant des ondes de surface. Lorsque ce corps fait partie d'un oscillateur, la fréquence d'oscillation varie avec l'accélération avec une sensibilité qui dépend de l'angle entre l'accélération et les axes de coupe du corps élastique. Les contraintes mécaniques produites dans le corps élastique diffèrent selon les directions d'accélération par rapport à la direction de propagation des ondes de surface. Pour effectuer des mesures valables, il est indispensable de connaître la direction exacte de l'accélération à mesurer, l'appareil répondant à toutes ses composantes. Il est connu par le document FR-A-2 262 288 de réaliser un accéléromètre à ondes élastiques de surface dans lequel l'élément déformable propageant les ondes élastiques de surface est un diaphragme au centre duquel est attachée une masse subissant l'accélération à mesurer. Cette attache sans élément de couplage intermédiaire ne permet pas de lier la déformation à une composante donnée du vecteur accélération. Le document FR-A-2 334 958 propose un accéléromètre à transducteur piézoélectrique comportant une masse inerte en forme de bille calée entre des appuis et possédant un point de contact avec le transducteur piézoélectrique. Ce montage ne permet pas de lier la mesure à une composante donnée du vecteur accélération. Le document US-A-3 233 465 décrit un accéléromètre à cristal piézoélectrique porteur d'une masse inerte dont le débattement est limité par une butée à bille, ce qui n'apporte aucune sélection des composantes du vecteur accélération. Il est également connu du document USA-A-2 726 074 d'utiliser dans un accéléromètre une masse inerte fluide agissant indirectement sur des transducteurs piézoélectriques. Enfin, le document FR-A-1 447 718 décrit un accéléromètre à transducteur piézoélectrique dont la masse séismique agit sur l'élément sensible par un bouchon transmetteur d'effort fixé à une paroi déformable.

L'invention a pour but la mesure d'une composante de direction bien déterminée de l'accélération, l'appareil ne répondant pas aux autres composantes.

A cet effet, l'accélération engendre au niveau de la masse séismique une force dont la transmission est assurée exclusivement suivant la normale à une face de lamelle mince déformable. Les composantes de la force d'inertie qui seraient contenues dans le plan de la face en question sont annulées en adoptant comme organe de couplage un moyen de roulement ou un moyen fluide. La lamelle mince déformable sert d'élément transducteur à ondes élastiques de surface puisque son autre face est disponible pour échanger ces ondes entre deux transducteurs électromécaniques reliés électriquement à un montage oscillateur.

Selon un premier mode de réalisation, la masse séismique est une masselotte suspendue ayant une facette de roulement. L'organe de couplage est alors une bille ou un rouleau pincé entre la facette de roulement et la lamelle déformable.

Selon un second mode de réalisation, la masse séismique est un volume fluide contenu dans une cavité ayant pour élément de paroi une face de la lamelle déformable.

Pour améliorer la sensibilité et compenser les effets de variation de température, on utilise deux oscillateurs comprenant chacun une lamelle disposée de façon que les variations de fréquence produite par une accélération de sens donné soient en sens inverse l'une de l'autre. La différence des fréquences des deux oscillateurs est mesurée.

L'accéléromètre selon l'invention peut être utilisé à bord d'un véhicule : automobile, avion, missile, éventuellement en introduisant des éléments de protection pour éviter une rupture des lamelles en cas de trop forte accélération et/ou de leur mise en résonance.

L'invention a pour objet un accéléromètre à ondes élastiques de surface comprenant au moins une masse inerte subissant l'accélération à mesurer, ladite masse étant couplée à une lamelle élastique associée à des moyens de mise en vibration provoquant l'émission d'ondes élastiques de surface selon au moins une surface de la lamelle de façon à constituer un oscillateur et des moyens de détection de la modulation de la fréquence d'oscillation due à l'accélération, caractérisé en ce que cette modulation provient d'une déformation de la lamelle sous l'action d'une force mécanique pouvant rouler entre ladite lamelle et un logement formé dans ladite masse inerte, ladite force étant située dans un plan contenant la normale à la surface de la lamelle, ladite masse inerte étant reliée par une suspension souple au bâti dudit accéléromètre prévue pour n'opposer sensiblement aucune résistance au déplacement de ladite masse inerte selon ladite normale.

L'invention a également pour objet un accéléromètre comprenant une masse inerte liquide remplissant une cavité délimitée par deux transducteurs d'extrémité à faces sensibles parallèles réagissant aux pressions exercées selon lesdites faces par ladite masse inerte liquide, caractérisé en ce que lesdits transducteurs sont constitués par deux lamelles élastiques ayant chacune une face baignée par ladite masse inerte liquide et une face opposée munie de moyens de mise en vibration provoquant l'émission d'ondes élastiques de surface de façon à constituer un oscillateur.

L'invention sera mieux comprise au moyen de la description ci-après et des figures annexées parmi lesquelles :

la figure 1 représente un accéléromètre comprenant une masselotte et un oscillateur à ligne à retard ;

les figures 2 et 3 représentent un accéléromètre comprenant une masselotte et deux oscillateurs à lignes à retard ;

la figure 4 représente un accéléromètre comprenant du mercure introduit entre deux oscillateurs à lignes à retard ;

la figure 5 représente un résonateur à ondes de surface pouvant remplacer les lignes à retard des dispositifs précédents ;

la figure 6 illustre des moyens de protection d'un accéléromètre selon l'invention.

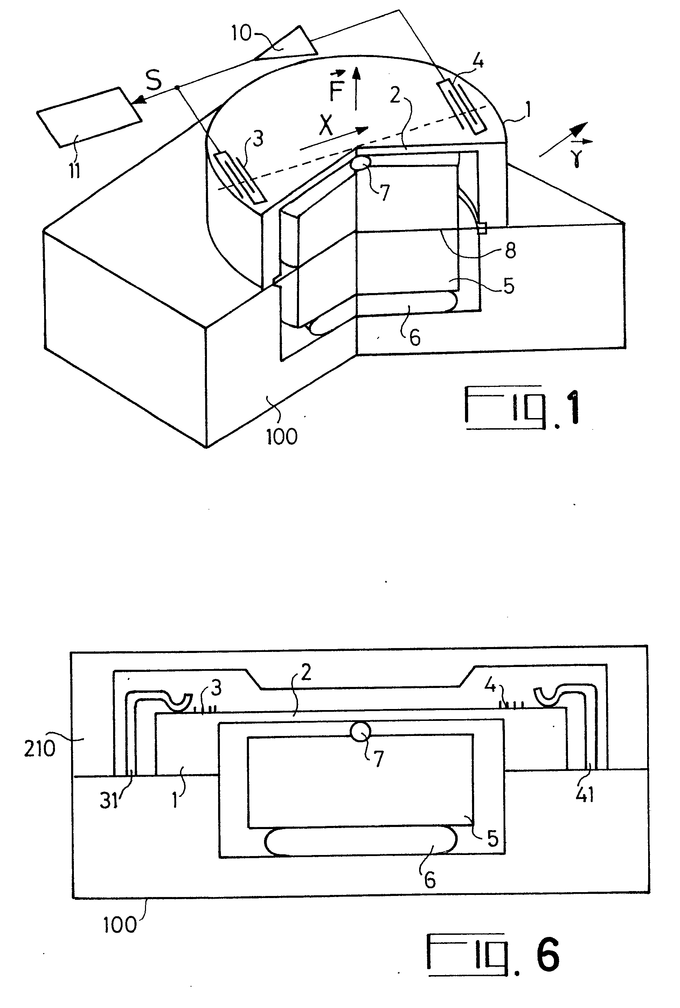

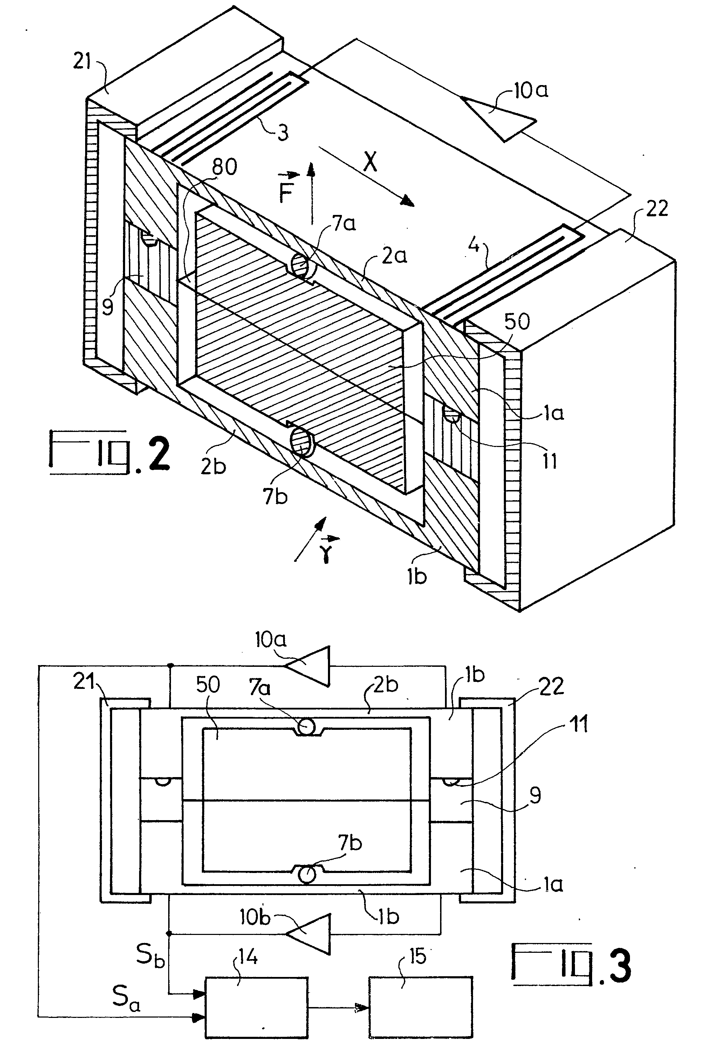

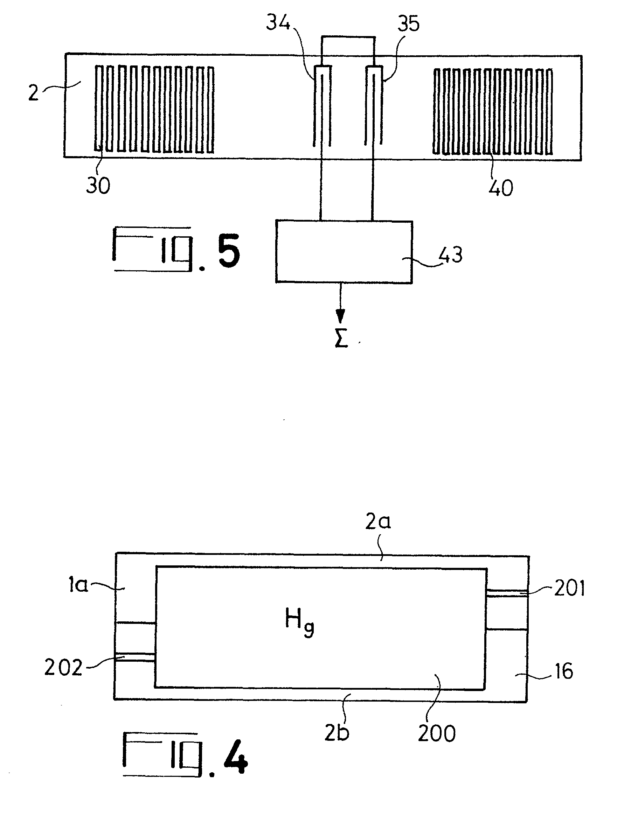

On peut voir sur la figure 1 une vue éclatée d'un oscillateur à ligne à retard utilisant les ondes élastiques de surface, la fréquence de cet oscillateur variant avec une accélération $\vec{\gamma}$ à laquelle est soumise la ligne à retard. Celle-ci est constituée d'un substrat piézoélectrique 1, par exemple à faces circulaires dont la partie centrale 2 est une lamelle fine. Sur l'une des faces du substrat 1 sont disposés deux transducteurs électromécaniques 3, 4 constitués par des électrodes conductrices en forme de peignes interdigités qui ont été déposés de façon diamétralement opposée pour que des ondes élastiques puissent être échangées entre les deux transducteurs, à la surface de la lamelle 2, dans une direction X. A titre d'exemple non limitatif, le substrat est en quartz taillé selon la coupe Y et l'épaisseur de la lamelle est de l'ordre d'une centaine de μm. D'autres matériaux piézoélectriques peuvent être utilisés : niobate de lithium, tantalate de lithium, céramique. Un système amplificateur électrique 10 relie les transducteurs 3 et 4, son entrée recevant le signal issu du transducteur 4 et sa sortie alimentant le transducteur 3, qui émet en réponse des ondes élastiques en direction du transducteur 4. Grâce au bouclage électromécanique sélectif en fréquence ainsi réalisé, le système amplificateur entre en oscillation et on dispose à la sortie de l'amplificateur 10 d'un signal S de fréquence f qui dépend du chemin et de la vitesse de phase des ondes élastiques, et du gain de l'amplificateur 10, et qui prend une valeur $f_0$ au repos. Lorsque la lamelle 2 est soumise à une force $\vec{F}$ normale à son plan, la fréquence f varie d'une quantité $\Delta f$ proportionnelle, tout du moins dans une certaine gamme, du module de cette force $\vec{F}$. Cette variation de fréquence est mesurable par un dispositif classique 11.

Le dispositif complet représenté sur la figure 1 est un accéléromètre à ligne à retard. Outre la ligne à retard ci-dessus décrite, l'accéléromètre comprend des moyens permettant de convertir une accélération $\vec{\gamma}$ quelconque à laquelle est soumis le dispositif en une force $\vec{F}$ normale à la surface de la lamelle 2. Il s'agit d'une masselotte cylindrique 5 de faible masse m prédéterminée introduite dans la cavité formée entre la lamelle 2 et le bâti 100 sur lequel repose le substrat 1 par sa partie périphérique. Cette cavité se prolonge dans le bâti lui-même et la masselotte 5 repose au fond de la cavité prévue dans le bâti par l'intermédiaire d'un coussin pneumatique 6. Une bille 7 est placée dans un logement prévu au centre de la face de la masselotte 5 se trouvant en vis-à-vis de la lamelle 2. Les dimensions de la masselotte et la pression exercée sur elle par le coussin pneumatique permettant à la bille d'être toujours en contact avec la lamelle. Les dimensions du logement dans lequel est placée la bille permettant à celle-ci de rouler dans le plan de la lamelle, si bien que la bille communique à la lamelle une force $\vec{F}$ toujours normale à ce plan. Lorsque l'ensemble du dispositif, donc en particulier la masselotte et la bille, sont soumises à l'accélération $\vec{\gamma}$, la force exercée par la bille sur la lamelle est définie par $\vec{F} = m\vec{\gamma_N}$, $\vec{\gamma_N}$ étant la composante normale de l'accélération, puisque les deux autres composantes de l'accélération se traduisent par un mouvement de roulement de la bille mais n'agissent pas sur la lamelle.

Bien entendu, pour s'assurer que toute l'accélération est transmise à la bille, la masselotte 5 ne doit pas avoir de contact avec le substrat 1. Pour cela, son diamètre est inférieur à celui de la lamelle donc de la cavité. De plus, pour éviter tout mouvement de la masselotte dans une direction parallèle à la lamelle, on peut prévoir un ou plusieurs films souples de suspension, tel que celui représenté, 8, encastré par exemple entre le substrat 1 et le bâti 100 et séparant en deux parties la masselotte 5. Ce film ne gène pas la transmission de l'accélération normale $\vec{\gamma_N}$ mais empêche tout mouvement non normal de la masselotte 5. Un essai a été effectué avec le dispositif représenté sur la figure 1, avec une masselotte 5 de masse m = 1,24 g, une lamelle de quartz de diamètre 6 mm et d'épaisseur 155 μm et une fréquence au repos $f_0$ égale à 105 MHz. On a pu mesurer une sensibilité de 160 Hz/g, où g = 9,81 m/s². Une augmentation de la fréquence $f_0$ et de la masse m peuvent améliorer la sensibilité. Une amélioration importante consiste à placer l'ensemble du dispositif dans une enceinte thermostatée. En effet, la température influe sur la fréquence d'oscillation et, en deçà d'une certaine valeur d'accélération, les effets dus aux variations de la température ambiante, même faibles, masquent les effets dus à l'accélération. Une autre source de variations de fréquence étant le bruit de phase caractérisé par la stabilité intrinsèque du matériau piézoélectrique, on peut augmenter la sensibilité en allongeant la longueur de la ligne, ce qui augmente le retard et a pour effet de réduire le bruit de phase.

Un moyen supplémentaire d'augmenter la sensibilité, et également de compenser les effets de températures est d'utiliser deux lignes à retard situées de part et d'autre de la masse soumise à l'accélération. On peut réunir deux dispositifs tels que celui de la figure 1, en les plaçant tête-bêche, ou bien réaliser un dispositif plus compact comportant une seule masse, comme le montre la figure 2 qui représente une moitié d'un dispositif à structure rectangulaire et la figure 3 qui représente une coupe de ce dispositif. Les « piliers » de deux lignes à retard parallèles 2a et 2b en forme de ponts sont réunis par l'intermédiaire d'une pièce intermédiaire 9 faite d'un matériau ne transmettant pas les ondes élastiques afin d'éviter tout couplage entre les deux lignes. Une masselotte 50 est placée dans la cavité formée par les deux lignes et maintenue comme précédemment par un film de suspension 80 encastré dans la pièce 9. Cette masselotte porte deux billes 7a et 7b respectivement en contact avec les parties amincies 2a et 2b des substrats 1a et 1b. Les lignes 2a et 2b sont respectivement bouclées sur des amplificateurs 10a et 10b, formant ainsi deux oscillateurs. Les dispositif est construit façon à être mécaniquement parfaitement symétrique. Pour assurer un parfait contact des billes 7a et 7b respectivement avec les lamelles 2a et 2b et éviter tout jeu entre les différents éléments des dispositifs, notamment les substrats 1a et 1b et la pièce intermédiaire 9, l'invention prévoit l'utilisation de deux sortes d'éléments élastiques : un joint torique 11 introduit entre la pièce 9 et les piliers d'un des substrats 1a et 1b d'une part, et deux pinces élastiques 21 et 22 ensérant les parties en vis-à-vis des substrats 2a et 2b et dont la force de serrage est telle que le joint torique 11 se trouve en état de compression. L'équilibre des forces de maintien des deux sortes d'éléments assure le contact des billes avec les lamelles, sans risque de les écraser, quelque soit l'accélération subie. Une accélération $\vec{\gamma}$ d'orientation quelconque produit dans la masselotte 50 une force $\vec{F}$ normale aux deux surfaces 2a et 2b et induit des variations de fréquences $\Delta f_a$ et $\Delta f_b$ qui, si le dispositif est parfaitement symétrique, sont telles que $\Delta f_a = - \Delta f_b$. On recueille les signaux $S_a$ et $S_b$ issus respectivement des oscillateurs 10a et 10b, de fréquence $f_a + \Delta f_a$ et $f_b + \Delta f_b$. Les signaux sont mélangés dans un mélangeur 14 dont le signal de sortie est filtré de façon à obtenir un signal basse fréquence, de fréquence $F = f_a - f_b + 2\Delta f_a$. La fréquence de ce signal est ensuite mesurée par un appareil classique 15. A fréquence d'oscillation des oscillateurs et masse des masselottes égales, la sensibilité est multipliée par 2 et les variations de température produisent des variations de fréquence de même signe dans les deux lignes, si bien qu'elles n'ont pas d'effet sur le signal de sortie. Une difficulté peut exister lorsque deux oscillateurs voisins oscillent à des fréquences proches l'une de l'autre : il y a risque de verrouillage des fréquences. Dans ce cas il est préférable de prendre des précautions de découplage.

Dans les deux modes de réalisation décrits, le milieu de conversion de l'accélération en une force agissant sur le substrat piézoélectrique est un élément solide, généralement métallique. Une variante de réalisation consiste à remplacer cet élément par un fluide, par exemple du mercure, occupant tout l'espace compris dans la cavité où se trouvait l'élément solide. On aboutit au dispositif représenté en coupe sur la figure 4, de réalisation plus aisée que les précédents. Les deux substrats piézoélectriques 1a et 1b sont placés tête-bêche, comme précédemment, avec ou sans élément intermédiaire pour séparer les « piliers », dans le cas d'une structure rectangulaire, ou la couronne épaisse extérieure, dans le cas d'une structure circulaire. Le mercure est introduit dans la cavité formée 200 grâce, par exemple à deux orifices 201 et 202 percés dans les piliers. Le mercure ayant une forte densité, on obtient dans un espace réduit (la longueur des lignes étant de l'ordre de 5 mm), une masse du même ordre que celle de la masselotte solide 5 ou 50 des dispositifs précédents, c'est-à-dire de l'ordre du gramme. En l'absence d'accélération, les deux lignes sont soumises à une pression uniforme. Lorsque le mercure est soumis à une accélération $\vec{\gamma}$, des gradients de pression se produisent sur toutes les parois qui se traduisent, en intégrant les phénomènes sur la surface de chaque ligne, par une augmentation moyenne de la force de pression, normale à la surface, pour l'une des lignes et une diminution d'égale amplitude pour l'autre ligne sauf si l'accélération est parallèle à la surface.

Les dispositifs décrits jusqu'à présent utilisaient des lignes à retard à ondes élastiques de surface se propageant dans un substrat piézoélectrique entre deux transducteurs constitués de peignes interdigités. On sait qu'il existe d'autres réalisations d'oscillateurs utilisant les ondes élastiques de surface, à base, non plus de lignes à retard, mais de résonateurs. La figure 5 représente une vue de dessus d'un oscillateur à résonateur, pouvant remplacer les oscillateurs visibles sur les figures 1 à 4. Une lame piézoélectrique 2 est munie sur une de ses faces de deux réseaux réflecteurs 30 et 40. Les traits des réseaux peuvent être obtenus par entailles de la lame 2, par des dépôts localisés, ou par bombardement ionique. Un régime d'ondes stationnaires est créé entre les deux réseaux. Une conversion mécano-électrique est obtenue au moyen d'un ou de préférence deux transducteurs 34 et 35. En reliant les transducteurs 34 et 35 à un circuit amplificateur 43, on obtient un circuit oscillant à une fréquence déterminée dépendant de la cavité résonante formée entre les deux réflecteurs que constituent les réseaux. Lorsqu'une force normale est appliquée à la lame, on observe une déviation de la fréquence du signal de sortie $\Sigma$ du circuit 43.

Etant donné la sensibilité des dispositifs décrits à toute accélération, y compris des accélérations qui ne sont pas destinées à être mesurées, et la fragilité des lamelles piézoélectriques utilisées, des précautions doivent être prises pour éviter les détériorations, lorsque l'accéléromètre risque d'être soumis à des accélérations intolérables, soit par leur amplitude, soit par leur fréquence si celle-ci entre dans une zone de résonance du dispositif. Ces accélérations peuvent intervenir lors des manipulations, ou bien pendant l'utilisation même de l'accéléromètre, si celui-ci est placé dans une enceinte sollicitée à vibrer, une automobile par exemple. Des expériences doivent être faites qui peuvent conduire à la constatation que le spectre des fréquences de vibrations auxquelles est soumis l'accéléromètre comprend des fréquences de résonance de celui-ci, notamment des basses fréquences telles les amplitudes d'oscillation des lamelles piézoélectriques conduisent à une rupture de celles-ci. Dans ce cas, il convient de prévoir des moyens de protection entrant en action uniquement pour des amplitudes d'oscillation excessives mais ne nuisant pas à la mesure des valeurs d'accélération situées dans la gamme prévue. Des moyens de protection sont représentés en coupe, schématiquement et à titre d'exemple, sur la figure 6, associés à un accéléromètre comprenant une ligne à retard du type décrit en relation avec la figure 1. Au bâti 100 supportant le substrat piézoélectrique 1, est fixé un élément solide 210 surplombant la face externe de la lamelle 2, à très faible distance de celle-ci, cette distance étant choisie de façon que la lamelle vienne y buter lorsqu'elle est soumise à des accélérations trop fortes. Des pièces élastiques à ressort 31 et 41 maintiennent le substrat 1 de part et d'autre des transducteurs 3 et 4 et coopèrent avec l'élément 210 en freinant le mouvement du substrat 1 vers l'élément 210 pour éviter un contact violent. Lorsque la lamelle 2 est en contact avec la pièce 210, toute mesure d'accélération est impossible, mais la lamelle est protégée.

Les modes de réalisation décrits ne sont donnés qu'à titre d'exemple non limitatif. Les accéléromètres décrits sont sensibles à la composante de l'accélération normale à la surface de la lamelle, ou des lamelles parallèles. On peut donc, en combinant trois accéléromètres semblables, dont la ou les lamelles sont selon trois plans perpendiculaires, obtenir une mesure des trois composantes d'une accélération quelconque.

Sans sortir du cadre de l'invention, le moyen de découplage mécanique qui transmet à la lamelle piézoélectrique une force en fonction de l'accélération subie peut n'avoir qu'un degré de liberté au lieu de deux. Ainsi, la bille peut être remplacée par un rouleau ayant une droite de contact avec la lamelle, de préférence dans une direction pour laquelle la ligne à retard ou la cavité résonante ont une réponse faible ou nulle.

**Revendications**

1. Accéléromètre à ondes élastiques de surface comprenant au moins une masse inerte (5, 50) subissant l'accélération à mesurer, ladite masse étant couplée à une lamelle élastique (2) associée à des moyens de mise en vibration (3, 4, 10) provoquant l'émission d'ondes élastiques de surface selon au moins une surface de la lamelle de façon à constituer un oscillateur et des moyens de détection de la modulation de la fréquence d'oscillation due à l'accélération, caractérisé en ce que cette modulation provient d'une déformation de la lamelle (2) sous l'action d'une force transmise à celle-ci par un élément de couplage mécanique (7) pouvant rouler entre ladite lamelle (2) et un logement formé dans ladite masse inerte (5, 50) ladite force étant située dans un plan contenant la normale à la surface de la lamelle (2), ladite masse inerte étant reliée par une suspension souple (6, 8, 80) au bâti (100) dudit accéléromètre prévue pour n'opposer sensiblement aucune résistance au déplacement de ladite masse inerte (5, 50) selon ladite normale.

2. Accéléromètre selon la revendication 1, caractérisé en ce qu'une face de la lamelle (2) porte des transducteurs électromécaniques d'émission et de réception (3, 4) échangeant des ondes de surface dans une direction prédéterminée (X), les moyens de mise en vibration comprenant un circuit amplificateur (10) relié aux transducteurs (3, 4).

3. Accéléromètre selon la revendication 1, caractérisé en ce qu'une face de la lamelle (2) porte deux réseaux réflecteurs d'ondes élastiques (30, 40) constituant une cavité résonante et au moins un transducteur électromécanique (34, 35) situé à l'intérieur de la cavité, les moyens de mise en vibration comprenant un circuit électrique actif (43) relié au transducteur (34, 35).

4. Accéléromètre selon l'une des revendications 1 à 3, caractérisé en ce que la lamelle (2) est constituée d'un matériau piézoélectrique.

5. Accéléromètre selon la revendication 4, caractérisé en ce que le matériau piézoélectrique est du quartz.

6. Accéléromètre selon la revendication 4, caractérisé en ce que le matériau piézoélectrique est du niobate de lithium.

7. Accéléromètre selon l'une des revendications 1 à 6, caractérisé en ce qu'il comprend au moins un transducteur électromécanique constitué de deux peignes à dents intercalées (3, 4).

8. Accéléromètre selon l'une des revendications 1 à 7, caractérisé en ce que l'élément de couplage mécanique (7, 7a, 7b) est un rouleau cylindrique dont l'une des génératrices rectilignes est en contact avec la lamelle (2).

9. Accéléromètre selon l'une des revendications 1 à 7, caractérisé en ce que ladite force a une direction normale à la surface de la lamelle (2), quelque soit la direction de l'accélération à mesurer.

10. Accéléromètre selon la revendication 9, caractérisé en ce que l'élément de couplage mécanique (7, 7a, 7b) est une bille sphérique ayant un point de contact avec la lamelle (2).

11. Accéléromètre selon la revendication 10, caractérisé en ce qu'il comprend deux lamelles (2a, 2b) parallèles, ladite masse inerte (50) étant située entre les deux lamelles (2a, 2b) ; deux billes sphériques (7a, 7b) situées de part et d'autre de la masse inerte (50) dans des logements permettant le roulement et ayant respectivement un point de contact avec les deux lamelles (2a, 2b).

12. Accéléromètre comprenant une masse inerte liquide (200) remplissant une cavité délimitée par deux transducteurs d'extrémité à faces sensibles parallèles (2a, 2b) réagissant aux pressions exercées selon lesdites faces par ladite masse inerte liquide, caractérisé en ce que lesdits transducteurs sont constitués par deux lamelles élastiques (2a, 2b) ayant chacune une face baignée par ladite masse inerte liquide (200) et une face opposée munie de moyens de mise en vibration provoquant l'émission d'ondes élastiques de surface de façon à constituer un oscillateur.

13. Accéléromètre selon la revendication 12, caractérisé en ce que la masse inerte liquide est constituée par du mercure.


## Claims

1. Elastic surface wave accelerometer comprising at least one inertial mass exposed to the acceleration to be measured, said mass being coupled to a resilient sheet (2) associated to the vibrating means (3, 4, 10) causing the emission of elastic surface waves along at least one surface of the sheet in a manner to form an oscillator and detection means for detecting the frequency modulation of the oscillation caused by the acceleration, characterized in that this modulation originates from a deformation of the sheet (2) as the result of a force transmitted thereto by a mechanic coupling member (7) adapted to roll between said sheet (2) and a recess formed in said inertial mass (5, 50), said force lying in a plane containing the normal to the surface of the sheet (2), said inertial mass being connected to the structure (100) of said accelerometer through a compliable suspension (6, 8, 80) provided for substantially not opposing any resistance to the movement of said inertial mass (5, 50) along said normal.

2. Accelerometer in accordance with claim 1, characterized in that one face of the sheet (2) carries electromechanic transmitter and receiver transducers (3, 4) exchanging surface waves in a predetermined direction (X), the vibrating means comprising an amplifier circuit (10) connected to the transducers (3, 4).

3. Accelerometer in accordance with claim 1, characterized in that one face of the sheet (2) carries two elastic wave reflecting grids (30, 40) forming a resonant cavity and at least one electromechanic transducer (34, 35) located inside the cavity, the vibrating means comprising an active electric circuit (43) connected to the transducer (34, 35).

4. Accelerometer in accordance with any of claims 1 to 3, characterized in that the sheet (2) is formed of a piezoelectric material.

5. Accelerometer in accordance with claim 2, characterized in that the piezoelectric material is quartz.

6. Accelerometer in accordance with claim 4, characterized in that the piezoelectric material is lithium niobate.

7. Accelerometer in accordance with any of claims 1 to 6, characterized in that it comprises at least one electromechanic transducer formed of two combs having interdigitated prongs (3, 4).

8. Accelerometer in accordance with any of claims 1 to 7, characterized in that the mechanic coupling member (7, 7a, 7b) is a cylindrical roller of which one rectilinear generatrix is in contact with the sheet (2).

9. Accelerometer in accordance with any of claims 1 to 7, characterized in that said force has a direction normal to the surface of the sheet (2), independent of the direction of the acceleration to be measured.

10. Accelerometer in accordance with claim 9, characterized in that the mechanic coupling member (7, 7a, 7b) is a spherical ball having one contact point with the sheet (2).

11. Accelerometer in accordance with claim 10, characterized in that it comprises two parallel sheets (2a, 2b), said inertial mass (50) being located between the two sheets (2a, 2b) ; two spherical balls (7a, 7b) located on both sides of the inertial mass (50) in recesses allowing rolling, and each having a contact point with one of the two sheets (2a, 2b).

12. Accelerometer comprising a liquid inertial mass (100) filling a cavity defined by two end transducers having substantially parallel faces (2a, 2b) responding to the pressures acted by said liquid inertial mass across said surfaces, characterized in that said transducers are formed of two resilient sheets (2a, 2b) each having one face wetted by said inertial liquid mass (200) and an opposed face provided with vibrating means causing the emission of electric surface waves in a manner to form an oscillator.

13. Accelerometer in accordance with claim 12, characterized in that the liquid inertial mass is formed of mercury.


## Ansprüche

1. Beschleunigungsmesser, der mit elastischen Oberflächenwellen arbeitet und wenigstens eine träge Masse (5, 50) umfaßt, die der zu messenden Beschleunigung ausgesetzt ist, wobei diese Masse an eine elastische Lamelle (2) angekoppelt ist, die Mitteln zum Versetzen in eine Vibration (3, 4, 10) zugeordent ist, welche die Aussendung von elastischen Oberflächenwellen entlang wenigstens einer Oberfläche der Lamelle verursachen, so daß ein Oszillator gebildet ist, und mit Detektionsmitteln zur Erfassung der Frequenzmodulation aufgrund der Beschleunigung, dadurch gekennzeichnet, daß diese Modulation auf einer Deformierung der Lamelle (2) unter der Einwirkung einer Kraft beruht, die auf diese durch ein mechanisches Kopplungselement (7) übertragen wird, welches zwischen dieser Lamelle (2) und einer Aufnahme, die in der genannten trägen Masse (5, 50) gebildet ist, rollen kann, wobei die genannte Kraft in einer Ebene liegt, welche die Normale auf die Oberfläche der Lamelle (2) enthält, und wobei die träge Masse durch eine nachgiebige Aufhängung (6, 8, 80) mit dem Aufbau (100) des Beschleunigungsmessers verbunden ist, welche vorgesehen ist, um der Bewegung der trägen Masse (5, 50) entlang dieser Normalen praktisch keinerlei Widerstand entgegenzusetzen.

2. Beschleunigungsmesser nach Anspruch 1, dadurch gekennzeichnet, daß eine Seite der Lamelle (2) elektromechanische Sende- und Empfangswandler (3, 4) trägt, welche Oberflächenwellen in einer vorbestimmten Richtung (X) austauschen, wobei die Vibrationsanregungsmittel eine mit den Wandlern (3, 4) verbundene Verstärkerschaltung (10) umfassen.

3. Beschleunigungsmesser nach Anspruch 1, dadurch gekennzeichnet, daß eine Seite der Lamelle (2) zwei elastische wellenreflektierende Gitter (30, 40) trägt, die einen Resonanzhohlraum bilden, und wenigstens einen elektromechanischen Wandler (34, 35) trägt, der im Inneren des Hohlraumes angeordnet ist, wobei die Vibrationsanregungsmittel eine aktive elektrische Schaltung (43) umfassen, die mit dem Wandler (34, 35) verbunden ist.

4. Beschleunigungsmesser nach einem der Ansprüche 1 bis 3, dadurch gekennzeichnet, daß die Lamelle (2) aus einem piezoelektrischen Material gebildet ist.

5. Beschleunigungsmesser nach Anspruch 4, dadurch gekennzeichnet, daß das piezoelektrische Material Quarz ist.

6. Beschleunigungsmesser nach Anspruch 4, dadurch gekennzeichnet, daß das piezoelektrische Material Lithiumniobat ist.

7. Beschleunigungsmesser nach einem der Ansprüche 1 bis 6, dadurch gekennzeichnet, daß er wenigstens einen elektromechanischen Wandler umfaßt, der aus zwei Kämmen (3, 4) mit verschachtelten Zinken gebildet ist.

8. Beschleunigungsmesser nach einem der ansprüche 1 bis 7, dadurch gekennzeichnet, daß das mechanische Kopplungselement (7, 7a, 7b) eine zylindrische Rolle ist, deren eine gerade Mantellinie in Berührung mit der Lamelle (2) ist.

9. Beschleunigungsmesser nach einem der Ansprüche 1 bis 7, dadurch gekennzeichnet, daß die genannte Kraft eine Richtung aufweist, die senkrecht zur Oberfläche der Lamelle (2) ist, gleich in welcher Richtung die Beschleunigung gemessen werden soll.

10. Beschleunigungsmesser nach Anspruch 9, dadurch gekennzeichnet, daß das mechanische Kopplungselement (7, 7a, 7b) eine Kugel ist, die einen Kontaktpunkt mit der Lamelle (2) aufweist.

11. Beschleunigungsmesser nach Anspruch 10, dadurch gekennzeichnet, daß er zwei parallele Lamellen (2a, 2b) umfaßt, wobei die träge Masse (50) zwischen den beiden Lamellen (2a, 2b) angeordnet ist; wobei zwei Kugeln (7a, 7b), die auf beiden Seiten der trägen Masse (50) in Aufnahmen angeordnet sind, das Rollen gestatten und jeweils einen Kontaktpunkt mit den beiden Lamellen (2a, 2b) aufweisen.

12. Beschleunigungsmesser mit einer flüssigen trägen Masse (200), die einen Hohlraum ausfüllt, welcher durch zwei Endwandler mit im wesentlichen parallelen Flächen (2a, 2b) begrenzt ist, die auf die Drücke reagieren, welche durch die genannte flüssige träge Masse auf diese Flächen ausgeübt werden, dadurch gekennzeichnet, daß die Wandler durch zwei elastische Lamellen (2a, 2b) gebildet sind, die jeweils eine Seite aufweisen, die in die genannte träge flüssige Masse (200) eingetaucht ist, und eine gegenüberliegende Seite aufweisen, die mit Mitteln zur Vibrationsanregung versehen ist, wodurch elastische Oberflächenwellen ausgesandt werden, so daß ein Oszillator gebildet ist.

13. Beschleunigungsmesser nach Anspruch 12, dadurch gekennzeichnet, daß die flüssige träge Masse durch Quecksilber gebildet ist.

Fig. 1

Fig. 6

0 012 644

Fig.2

Fig.3

Fig. 5

Fig. 4